# EUROPEAN PATENT APPLICATION

(11) **EP 2 848 455 A1**
(43) Date of publication of application: **18.03.2015**
(21) Application number: 12876282.0
(22) Date of filing: 24.07.2012
(51) Int. Cl.: B60L 11/18

(54) **ELECTRIC VEHICLE WITH AN ON-BOARD CHARGER**

(30) Priority: 10.05.2012 RU 2012118976
(71) Applicant: Obschestvo s ogranichennoy otvetstvennostyu 'Tovarischestvo energeticheskikh i electromobilnikh proektov', Moscow 127018 (RU)
(72) Inventor: DASHKO, Oleg Grigoryevich, Korolev Moskovskaya oblast 141077 (RU); DOLGOLAPTEV, Anatoliy Vasilyevich, Pestovo Moskovskaya oblast 140071 (RU); SMOTROV, Evgeniy Alexandrovich, Odessa Odesskaya oblast 65009 (UA); VERSHININ, Dmitriy Veniaminovich, Odessa Odesskaya oblast 65029 (UA); ZENIN, Sergey Borisovich, Korolev 141075 (RU); SUSLENKO, Alexander Yuirievich, Odessa Odesskaya oblast 65063 (UA)
(74) Representative: Hamer, Christopher K.
(86) International application number: PCT/RU2012/000602
(87) International publication number: WO 2013/169143

(57) **Abstract**

Electric-powered vehicle with self-contained power supply source as an accumulator storage battery, comprising at least, a single electric motor, linked to the vehicle's wheels through a power transmission or without the same, and a control system including a single or several reversible transducers used to control speed and/or torque of the above electric motor, a high-value capacitor and ballast resistance with discharge switch, a DC-to DC step-up/step-down reversible transducer with the control system, two current sensors, two voltage sensors, where one or several transducers being directly connected to power source terminals; capacitor being connected to power source terminals through the above reversible transducer; current sensor 1 reading out both value and direction of the power source current; current sensor 2 monitoring current of an inductance coil being part of the reversible transducer; voltage sensor 1 measuring voltage at the power source terminals; voltage sensor 2 measuring voltage at the supercapacitor's terminals; outputs of the above sensors being connected to inputs of the reversible transducer control system, outputs of which being connected to control inputs of the reversible transducer and the discharge switch.

To enhance the EPDV functional capabilities in terms of charging from the external source, reduce the EPDV weight, dimensions and cost, and make the EPDV operation safer, introduced into the EPDV were a three-phase rectifier having inputs connected to the external power source connector, an output being connected through the introduced contactor to the supercapacitor's terminals; the rectifier output voltage sensor with galvanically isolated output being connected to the introduced charging control unit, the other inputs of which being connected to the outputs of the introduced state of charge level selector; the charge control unit outputs being connected to the control input of the above contactor, inputs of the reversible transducer control system and the electric-powered vehicle's control system.

## Description

### Technical Field

The invention pertains to vehicles with electric or hybrid drive.

### Background Art

Electric-powered vehicles have recently become a common trend - percentage-wise number of newly produced clean electromobiles and hybrid vehicles, as an intermediate solution, is steadily growing.

An essential problem facing the large-scale application of electrical-powered vehicles (EPDV) consists in battery recharging its engineering and economic aspects closely associated with the duration of such process. It is well-known that the increase in charging current may significantly reduce the charging duration. This is particularly obvious when it comes to the transition of US households from 110 V power supply sources to powerful industrial-like charging units. There is a potential interim option that provides for fitting house-adjacent garage with a mains-energized special-purpose device capable of reducing battery charging time (e.g. for hybrid vehicle Chevrolet Volt from 6-8 hrs with the use of standard voltage as high as 110 V to 3-4 hrs with voltage increase to 240 V). However, both purchase and installation of such device involve certain extra costs (D.M. Etkin "Certain Engineering and Economic Aspects of Electrifying Production Cars in the USA", Journal of Automotive Engineers 2(61) and 4(63), 2010).

Development of charging units will soon make them as widespread as gas stations and capable of recovering 80% of battery power within 15-30 minutes. What's more, electric battery is becoming chargeable from a wall socket. (A.MILOVZOROV "It's getting trendy to refuel from wall socket" http://www.utro.ru/articles/2010/11/24/939328.shtml).

A potential way of fast and cost-efficient recovery of battery power lies in placing charging units directly aboard a vehicle.

According to a known engineering solution (Patent US5418437), a drive system of an electric power-driven vehicle (EPDV) containing an electric motor system (motors and transducers), a control system, control elements and a battery has been extended with a charging unit having input for the connection to an AC source, and an output connected to the output of the above battery. Such charging unit has also an actuating device to monitor the charging unit condition and control its operation.

Disadvantages of the above device:
- limited functional capabilities - developed to operate from a single voltage value of supply network, the device provides a single level of charging rate;
- increase of the EPDV electrical equipment weight and cost due to placing the transducer and charging unit actuating device aboard the EPDV;
- inadequate level of safety - there is no provision made for disabling the motion of the vehicle with the charging unit connected to the AC source.

A solution in the application for a patent US2007/0068714 A1 is, in terms of technical substance, the closest one to the present invention. The above device contains an internal combustion engine with motor dynamo; two electric motors connected respectively to the wheels of front and rear axles, and driven by relevant transducers, a battery and a storage device (a supercapacitor with double electric layer and/or a flywheel) connected to common buses through relevant transducers; a control module and a charging unit, the input of which may through a matching transformer be connected to an external AC power source, and output terminals being connected to the above common buses (+) and (-).

Disadvantages of the above device:
- limited functional capabilities - the charging unit may only operate at the supply line AC voltage matched by the above transformer and higher in terms of value than the voltage at the above power buses;
- increase of the EPDV electrical equipment weight and cost due to placing the transducer and charging unit actuating device aboard the EPDV;
- inadequate level of safety - there is no provision made for disabling the motion of the vehicle with the charging unit connected to the AC source.

### Disclosure of Invention

The present invention aims at the elimination of a number of disadvantages found in the above devices i.e. enhancement of the EPDV functional capabilities in terms of charging from the external source, reduction of the EPDV weight, dimensions and cost, and making the EPDV operation safer.

The above aims are achieved in the proposed electric-powered vehicle with onboard charging unit. The vehicle contains at least a single electric motor connected to the vehicle's wheels through a power transmission or without the same, and a control system including one or several reversible transducers to control speed and/or torque of the above electric motor, a battery, a high-value capacitor (a bank of supercapacitors (BSC), a DC-to DC step-up/step-down reversible transducer (recuperator, Re) with the recuperator control system, two current sensors, two voltage sensors, one or several transducers being directly connected to the power source (storage battery, SB) terminals; the capacitor being connected to the SB terminals through the above reversible transducer; the first current sensor determining the SB current value and direction; the second current sensor monitoring current of an inductance coil being part of the reversible transducer; the first voltage sensor measuring voltage at the SB terminals; the second voltage sensor measuring voltage at the bank of supercapacitors' terminals; outputs of the above sensors being connected to the inputs of the reversible transducer control system, the outputs of which being connected to control inputs of the reversible transducer switches and discharge switch.

Introduced aboard the EPDV was a three-phase rectifier with inputs connected to terminals of an external power source connector, while outputs, through an introduced conductor (contactor, thyristor), to terminals of BSC. Apart from this, also connected to the rectifier output is a voltage sensor with galvanically isolated output (e.g. an optron with voltage dropping resistor), and with output connected to the input of an introduced charge control unit, the other inputs of which being connected with outputs of state of charge level selector (CLS).

### Brief Description of Drawings

Figure 1 shows the electric circuit of the proposed electric-powered vehicle.
Figure 2 shows operation algorithm of the above electric circuit.

### Detailed description of invention

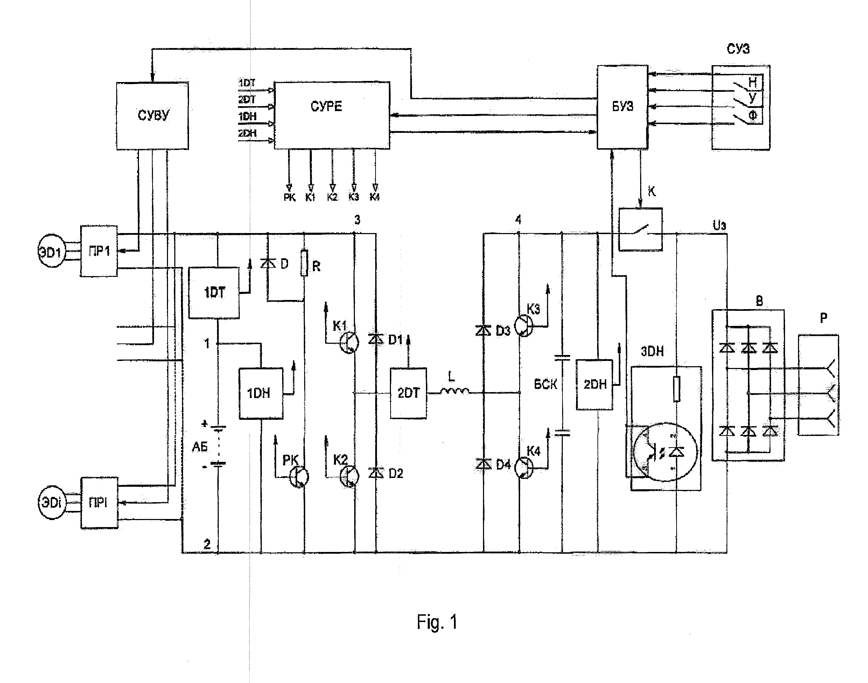

Let us refer to Figure 1. The electric circuit of the proposed electric-powered vehicle contains a power source with terminals 1 and 2, the voltage at which being measured by means of voltage sensor 1 VS, while the current at which being measured by means of current sensor 1 CS. Connected to terminals 1 and 2 are: series-connected ballast resistance R (in shunt with bypass diode D) and discharge switch DS; and reversible transducers RT1 ...ITPi used to control speed and/or torque of electric motors EM1...EM1 linked to the EPDV wheels through the power transmission or without the same (with the use of motor-in-wheels) not shown in the Figure.

The circuit also contains a bank of supercapacitors, the voltage at which being measured by means of sensor 2VS. The bank is connected to output terminals 4 and 2 of the reversible transducer, input terminals 3 and 2 of which are connected to terminals 1 and 2 of the power source. The reversible transducer consists of four transistor switches Sw1... Sw4 in shunt with bypass diodes D1...D4 of inductance coil L, the current of which being measured by means of sensor 2CS. Connected to the reversible transducer control system are outputs of the above sensors. The control system outputs are connected to control inputs of Re and DS.

Top level control system (LCS) of the EPDV will link signals issued by the sensor of steering angle, throttle pedal position (velocity demand and/or electric motor torque), brake pedal position (braking moment setting), handbrake (parking brake), mode switch (forward, backward etc.) (not shown in the Figure) to MS1 ...ITPi.

The circuit has also been supplemented with three-phase rectifier R, connector C for external power source EPS, contactor Co, output voltage sensor B of 3VS, charge control unit CCU and state of charge level selector (CLS). At the same time, input B is connected to connector C, positive output P OUT through contactor C is connected to positive output 4 CK, negative output B is connected to common bus (terminal 2). Galvanically isolated output 3VS (used as a substitute of which could be an optron with voltage dropping resistor) is connected to input CCU, the other inputs of which are connected to outputs CLS. Outputs CCU are linked to LCS and recuperator control system (ReCS).

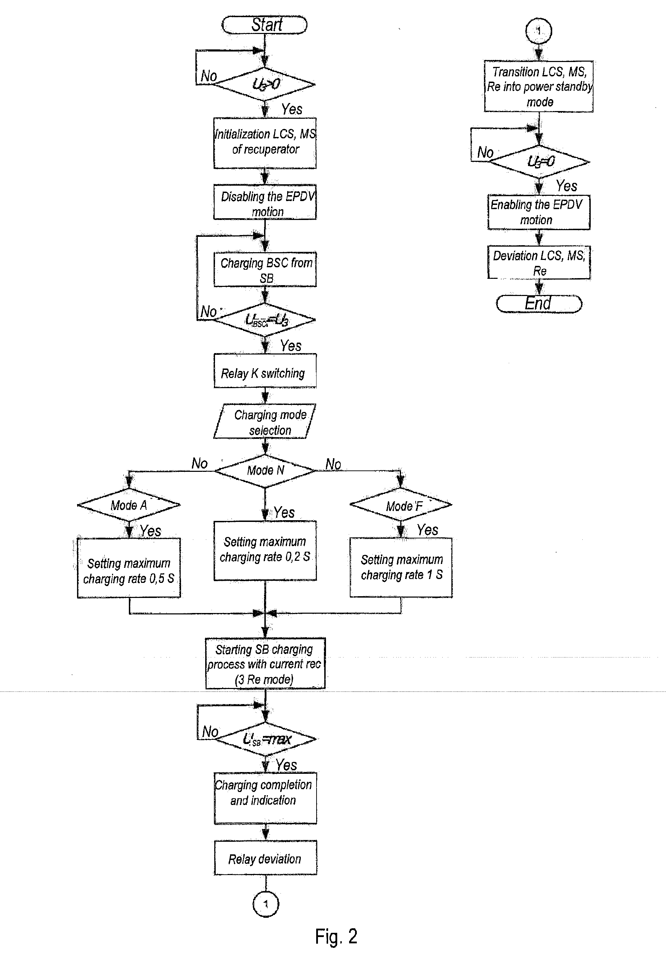

The proposed device operates in accordance with the algorithm shown in Figure 2 as follows:
EPS is connected to the EPDV electrical equipment circuit through connector P. Used as EPS could be either single-phase or three-phase AC network; wind-powered generator or solar panel; hydrogen fuel cell source etc. with output voltage of 100 - 380 V of DC or AC (depending on specific design of the device). CLS is used to control charging mode (maximum level of charge current) i.e. normal, accelerated and forced (N, A or F respectively) depending on the as-is situation and EPS power.

Voltage U3, once applied to the rectifier output through the introduced voltage monitoring circuit consisting of (3VS), will actuate the charging circuit of SB CCU that:
1. via LCS, will switch on the EPDV control circuit (similarly to ignition switch);
2. will disable the EPDV electric drive thus preventing the EPDV from motion with connected EPS cable;
3. additional command issued by Re will bring the bank of supercapacitors (BSC) voltage to a maximum value of U BSCmax;
4. voltage sensor 2VS monitoring BSC voltage will give command to actuate the electrical equipment circuit contactor Co that will link positive output of rectifier B to positive terminal of BSC;
5. command given by the above contactor Co will start charging SB from BSC in charging modes N, A or F as set by CLS located on the EPDV control panel and/or under the cover of compartment holding connector P used for connecting EPS;
6. drop of voltage U_{BSC} to the level of U3 will open diodes of rectifier B, and start charging SB from EPS, BSC will, at the same time, act as a filtering capacitor;
7. once the SB voltage reached the pre-set level monitored by the SB voltage sensor 1VS, or once the SB charging rate monitored by the SB current sensor 1 CS dropped below the pre-set level, the SB charging completion command will form;
8. the above command will start charging the bank (BSC) value to a maximum voltage value of U BSC max from SB;
9. command given by the voltage sensor used to monitor BSC voltage will disconnect the contactor used to connect the rectifier positive output to BSC positive terminal, and will engage the CCU trigger used to indicate the SB charging completion;
10. lock of the EPDV electric drives (Claim 2) used to prevent the EPDV motion with the connected EPS cable will not be released.

To release the lock and operate the EPDV, always disengage the EPS cable from the connector.

### Industrial Applicability

Introduction of the above elements into the vehicle's electric circuit, and the use of the proposed algorithm enable to develop an EPDV-borne charging unit with broad options in terms of the EPS parameters on the basis of the existing main circuit of the EPDV electrical equipment, and ensure high level of the EPDV operation safety by preventing motion of the EPDV with the EPS cable engaged.

## Claims

1. An electric-powered vehicle with self-contained power supply source as an accumulator storage battery comprising at least a single electric motor linked to the vehicle's wheels through a power transmission or without the same and a control system including a single or several reversible transducers used to control speed and/or torque of the above electric motor, a high-value supercapacitor and ballast resistance with discharge switch, a DC-to DC step-up/step-down reversible transducer with the control system, two current sensors, two voltage sensors, where one or several reversible transducers being directly connected to power source terminals; capacitor being connected to power source terminals through the above reversible transducer; current sensor 1 reading out both value and direction of the power source current; current sensor 2 monitoring current of an inductance coil being part of the reversible transducer; voltage sensor 1 measuring voltage at the power source terminals; voltage sensor 2 measuring voltage at the supercapacitor's terminals; outputs of the above sensors being connected to inputs of the reversible transducer control system, outputs of which being connected to control inputs of the reversible transducer and the discharge switch differing in that it is provided with a three-phase rectifier, the inputs of which being connected to the external power source connector, while the output being connected through the contactor to the supercapacitor's terminals; the rectifier output voltage sensor to the output connected to the input of the introduced charge control unit, the other inputs of which being connected to outputs of the introduced state of charge level selector; the charge control unit outputs being connected to the control input of the above contactor, the inputs of the reversible transducer control system and the electric-powered vehicle control system.

2. The device referred to in Claim 1, where the rectifier output voltage sensor has galvanically isolated output consisting of an optron with voltage dropping resistor.

3. The device referred to in Claim 1, where in order to achieve current-free switching of the contactor at the start and at the end of the charging process, the supercapacitor voltage is brought to the level exceeding the level of voltage at the rectifier output.

4. The device referred to in Claim 1, where the voltage, once applied at the rectifier output, will disable transducers of the electric-powered vehicle's drives in order to prevent the electric-powered vehicle from motion with the connected cable of the external power source.
